# EUROPEAN PATENT APPLICATION

(11) **EP 4 686 151 A1**
(43) Date of publication of application: **28.01.2026**
(21) Application number: 24306265.0
(22) Date of filing: 25.07.2024
(51) Int. Cl.: H04L 9/40, H04W 12/06, H04W 12/30, H04W 8/20

(54) **AN EUICC INSTALLED IN A TELECOMMUNICATION DEVICE, ABLE, TO DELEGATE THE PROCESSING OF AN AUTHENTICATION COMMAND FROM THE TELECOMMUNICATION DEVICE TO AN AUTHENTICATION APPLET IN AN ENABLED PROFILE**

(71) Applicant: THALES DIS FRANCE SAS, 92190 Meudon (FR)
(72) Inventor: DEMARTY, Joël, 35520 MONTREUIL LE GAST (FR); DUPREZ, Jérôme, 13111 COUDOUX (FR)
(74) Representative: Scheer, Luc

(57) **Abstract**

The invention concerns an elllCC (20) installed in a telecommunication device, able to delegate the processing of an authenticate command from the telecommunication device to an authentication applet (18a) in an enabled profile (18), the enabled profile (18) comprising means to indicate to the eUICC (20) that the processing of the authenticate command has to be performed by the authentication applet (18a).

## Description

The present invention concerns telecommunications and in particular eUICCs (UICCS embedded in telecommunication devices, like consumer device - smartphones, PDAs, computers,... or loT devices).

More precisely, the invention concerns an eUICC, like defined by the GSMA, on which it is possible to download and install at least a profile of a MNO, allowing to authenticate and connect to a network. In the state of the art, such a profile installed on an eUICC contains only parameters (e.g. identifiers and keys) for one or more standard network authentication application (NAA), standardized by 3GPP, and implemented by the eUICC OS, to be used to authenticate to the MNO network. Examples of such applications include SIM 2G, USIM 3G, 4G, 5G.

However, it can happen than some network-specific authentication applications, are used for different telecom markets. Examples include the algorithms described in EP-18 703 004 or PCT/EP2018/052631. The purpose for these inventions was for consumer OEMs to reduce the cost of downloading a bootstrap profile. For loT OEMs the purpose was to provide the best connectivity at the location of installation or to provide a backup resilient connectivity in case of critical use cases.

Another example is the application SSIM (Slice SIM) to authenticate to a slice in 5G architecture: This application is standardized by 3GPP, but the standard leaves the cryptographic algorithm unspecified.

A third example is used by military OEMs to provide connectivity to tactical networks.

A fourth example is the ability to provide, in the profile, an authentication applet whose algorithm is quantum-safe, in situations where upgrading the eUICC OS on the field to add quantum-safe algorithm would be impossible or inconvenient.

All those examples are proprietary and when implemented in the OS of an eUICC, any change requires a new GSMA certification (which is costly and lengthy) and at minimum an upgrade by the MNO. Moreover, if new applications and algorithms appear in the market after the eUICC is deployed on the field, MNOs profiles can only leverage those supported by the eUICC OS on the field, and cannot leverage the new applications and algorithms.

To add to the complexity of proprietary authentication solutions proposed to an end-user, it is ever more complicated to mix two different use cases. For instance, using loT resilience use case together with military tactical product network.

As defined in 3GPP standard, and referenced in GSMA standards SGP.02, SGP.22 and SGP.32, well-known NAAs are USIM, ISIM, CSIM, and EAP. The NAA parameters used by each NAA is installed in the profile as a Profile Element as specified by TCA Interoperable Profile Package. In the Profile Element, there is an algorithm identifier ID, and the parameters of the algorithm, like Ki / OPC, etc. And the implementation of the algorithm for authentication is implemented in the UICC OS in a so-called Telecom Framework.

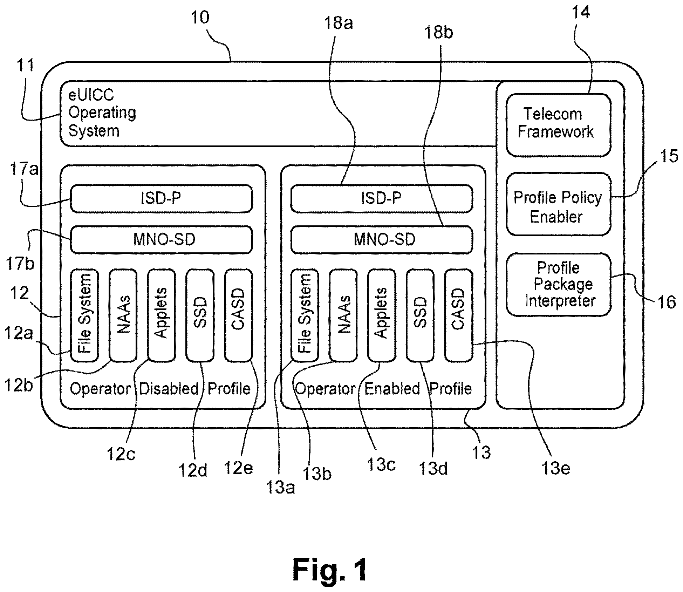

Figure 1 represents the state of the art.

In this figure, there is an eUICC operating system 11 (OS) comprised in an eUICC 10.

The OS 11 comprises a Telecom Framework 14, a Profile Policy Enabler 15 and a Profile Package Interpreter 16, like defined by the RSP specification SGP.22 v2.5, 26 May 2023.

In the eUICC 10, two profiles of MNOs have been installed, a profile 12 and a profile 13. Only one of these profiles is active (profile 13), profile 12 being disabled.

In each profile 12 and 13, the following files (security domains or SD) are respectively present:
- ISD-Ps (Issuer Security Domain Profiles) 17a and 18a;
- MNO-SDs 17b and 18b;
- file systems 12a and 13a;
- NAAs (Network Access Applications) parameters 12b and 13b;
- applets from the MNO 12c and 13c;
- security domains SSDs of the MNOs 12d and 13d;
- CASDs (Controlling Authority Security Domains) 12e and 13e.

The profiles 12 and 13 in the eUICC 10 are relying on well defined NAAs: USIM, ISIM, CSIM, EAP,...
The NAAs 12b and 13b contain the algorithm parameters that the profile has to use to connect to the MNO network of the enabled profile (certain devices and eUICCs also support to enable several profiles simultaneously, and use those profiles in parallel to connect to two MNO networks simultaneously).

For example, the algorithm can be TUAK or Milenage... with corresponding parameters of the algorithms (Ki, OPC,...). As already said, the algorithm is identified by an identifier (ID). The implementation (instructions performing a functionality, here an authentication) of the authentication algorithm is in the Telecom Framework 14 of the eUICC 10.

So the problem is to propose a solution for using a network-specific authentication application for a profile installed in an eUICC 10 that does not know this network-specific authentication application at the time it was certified by the GSMA.

So, the invention proposes a solution compliant with this standardized solution and which allows the Profile to come with a network-specific authentication algorithm. Instead of having this separation of duty, the algorithm ID in the profile, and algorithm parameter in the profile and algorithm implementation in the eUICC, it is proposed to delegate the algorithm implementation to an applet contained in the profile.

The invention proposes an eUICC according to claim 1, a profile according to claims 2 and 3 and a profile generator according to claims 4 and 5.

The invention will be better understood by reading the following description of the figures that represent a structure of a new profile that does not require a new GSMA certification when this profile has been updated.

Figure 1 has been described in regard of the state of the art;

Figure 2 represents the new structure of a profile according to the invention.

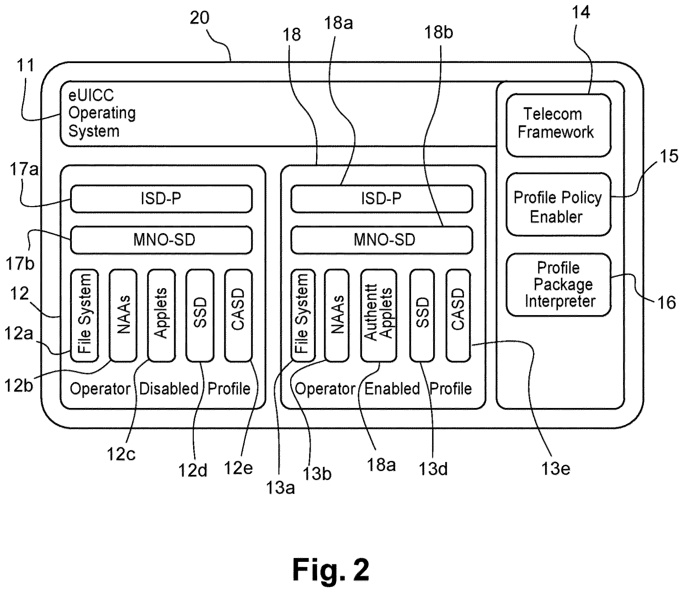

In figure 2, an operator enabled profile 18 contains the same files as described in relation with figure 1 and have the same references.

The Operator Enabled Profile is here referenced 18 since it has, among the applets presented in figure 1 a new applet 18a called Authentication Applet.

This Authentication Applet 18a is in a new eUICC 20 and comprised in a MNO enabled profile 18.

The Authentication Applet 18a implements an authentication algorithm which has to be used by the eUICC 20 to connect to a MNO network when the profile is activated in the eUICC 20.

The term "implements" corresponds to a software containing instructions or being programmed to perform a functionality. Thus, it is an applet which code contains the instructions of the authentication algorithm, which when executed will allow authentication to the network of the eUICC 20.

This applet and the parameters of the profile will determine wich authentication algorithm has to be used to connect to the MNO owner of the profile 18.

In a preferred mode, when the UE performs network authentication, it will call the authenticate command of the UICC 20. This is the command that is called by the hosted modem (aka Terminal in ETSI Smart Card terminology). And if the active profile has defined an authentication applet, the eUICC OS 11 will delegate the processing of this authenticate command to this applet 18a.

So, instead of relying on an implementation which is in the OS 11, the proposed implementation will be in the profile 18. And then, as the implementation is in the profile 18, it is possible to implement another kind of authentication (and so proprietary solutions) in a flexible way.

The invention adds to the existing algorithm implementation from the OS 11. With this way, a custom algorithm in the profile 18 can be used. This custom algorithm can also decide, on certain criteria, to fallback to one of the standard algorithms implemented in the Telecom Framework 14.

For instance, for a fallback situation, in the cases proposed above in EP-18 703 004 or PCT/EP2018/052631 mentioned previously, after a t-IMSI has been downloaded from a server using the method of these inventions, it is possible to use a standard managed authentication algorithm with the Ki and OPC sent by the server to the eUICC. And of course, the OS 11 can manage it.

The invention adds a new capability from the eUICC advertising that it can support an Authentication Applet 18a. Then in the profile package (typically a script in the standard language TCA Interoperable Profile Package) allowing to install a profile, a special Profile Element called AKA parameter has an optional entry for the Authentication Applets 18a.

Each authentication applet is referenced by its AID. The applets are provided in the profiles and with the corresponding AID. And each applet should have a very well-defined signature, which is similar to an implementation for authenticate in the operating system.

So basically, when the eUICC OS 11 receives a command from the UE to perform an authentication, the eUICC OS 11 delegates the execution of the command to the Authentication Applet 18a. The applet sends a response that the eUICC OS can relay to the UE, it's exactly the content of the Authenticate Response message.

The invention is fully standard compatible with RSP SGP.22 v2.3 and RSP SGP.32 v1.1 of the GSMA: Profiles that do not use the delegation mechanism can simply be installed with a Profile Element AKA parameter that does not indicate an authentication applet. When receiving an authentication command from the UE for such an Enabled profile, the eUICC OS 11 simply hands off the command to the standard NAA in the Telecom Framework 14, and does not attempt to delegate to an applet present in the profile.

The invention also concerns a profile 18 for an eUICC 20, this profile comprising an authentication applet 18a for performing the processing of an authenticate command sent by a telecommunication device.

The configuration of this delegation mechanism is preferably provided during installation in a Profile Element according to TCA Interoperable Profile Package.

Finally, the invention concerns a profile generator delivering a profile comprising one or more authentication applets, and a configuration mechanism to indicate to an eUICC 20 that the processing of network authenticate commands must be performed by one or more authentication applets.

This profile generator can be either:
- an SM-DP+ or
- an SM-DP or
- an SM-DPf for an IFPP or
- a source eUICC exporting a profile to a target eUICC.

The invention allows to deploy proprietary solutions on any eUICC once it's standardized without recertifying the OS 11. It also allows to develop multiple proprietary solutions on the same UICC OS that has not to be modified.

The invention also deploys proprietary or sovereign security schemes for authentication to networks, like for military sovereignty. And it provides cryptography agility for a given MNO. Because with this solution, it could be for instance possible to deploy post-quantum cryptography in authentication applets even on existing eUICCs which operating systems cannot themselves be upgraded with post-quantum cryptography.

## Claims

1. An eUICC (20) installed in a telecommunication device, able to delegate the processing of an authenticate command from the telecommunication device to an authentication applet (18a) in an enabled profile (18), said enabled profile (18) comprising means to indicate to said eUICC (20) that said processing of said authenticate command has to be performed by said authentication applet (18a).

2. A profile (18) for an eUICC (20), said profile comprising an authentication applet (18a) for performing the processing of an authenticate command sent by a telecommunication device.

3. A profile according to claim 2 wherein the configuration of said delegation mechanism is provided during installation in a Profile Element according to TCA Interoperable Profile Package.

4. A profile generator delivering a profile comprising one or more authentication applets, and a configuration mechanism to indicate to an eUICC (20) that the processing of network authenticate commands must be performed by said one or more authentication applets.

5. A profile generator according to claim 4 wherein it is either:
- an SM-DP+ or
- an SM-DP or
- an SM-DPf for an IFPP or
- a source eUICC exporting a profile to a target eUICC.
